(19) **Europäisches Patentamt / European Patent Office / Office européen des brevets**

(11) **EP 2 097 622 B1**

(12) **FASCICULE DE BREVET EUROPEEN**

(45) Date de publication et mention de la délivrance du brevet:
**31.03.2010 Bulletin 2010/13**

(51) Int Cl.:
**F01N 3/08** *(2006.01)* **F02D 41/02** *(2006.01)*

(21) Numéro de dépôt: **07822598.4**

(22) Date de dépôt: **14.11.2007**

(86) Numéro de dépôt international:
**PCT/EP2007/062349**

(87) Numéro de publication internationale:
**WO 2008/068134 (12.06.2008 Gazette 2008/24)**

(54) **SYSTEME ET PROCEDE DE REGENERATION D'UN DISPOSITIF DE PIEGEAGE CATALYTIQUE D'OXYDES D'AZOTE**

SYSTEM UND VERFAHREN ZUR REGENERATION EINER VORRICHTUNG ZUM KATALYTISCHEN ZWISCHENSPEICHERN VON STICKOXIDEN

SYSTEM AND METHOD FOR REGENERATING A DEVICE FOR CATALYTICALLY TRAPPING OXIDES OF NITROGEN

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.12.2006 FR 0655346**

(43) Date de publication de la demande:
**09.09.2009 Bulletin 2009/37**

(73) Titulaire: **Renault S.A.S.**
**92100 Boulogne-Billancourt (FR)**

(72) Inventeurs:
• **D'ORIA, Sébastien**
 **75014 Paris (FR)**
• **RAMSEYER, Aurélien**
 **91310 Longtpont S/Org (FR)**
• **MOUGAMADOU, Nicolas**
 **75014 Paris (FR)**

(74) Mandataire: **Religieux, Vincent et al**
**Renault Technocentre**
**Sce 00267 - TCR GRA 2 36**
**1, avenue du Golf**
**78288 Guyancourt Cedex (FR)**

(56) Documents cités:
**EP-B1- 1 161 618       DE-A1- 10 036 390**
**DE-A1- 19 921 972       FR-A1- 2 868 129**

## Description

La présente invention porte sur un système et un procédé de régénération d'un dispositif de piégeage catalytique d'oxydes d'azote disposé dans la ligne d'échappement d'un moteur à combustion interne de type Diesel, notamment de véhicule automobile.

De manière connue, les oxydes d'azote $NO_x$ provoquent des infections et des allergies respiratoires, ou jouent un rôle influençant la formation de pluies acides, de sorte que la plupart des pays ont imposé des normes limitant l'émission d'oxydes d'azote par les véhicules. Aussi, la plupart des véhicules, et notamment les véhicules à moteur de type Diesel, sont pourvus de dispositifs de piégeage catalytique d'oxydes d'azote.

Or, ces dispositifs catalytiques sont sensibles à l'empoisonnement au soufre, particulièrement aux oxydes de soufre $SO_x$, et des phases d'élimination des oxydes de soufre du catalyseur sont nécessaires. Les phases d'élimination des oxydes de soufre du catalyseur ne peuvent se réaliser qu'à haute température dans le catalyseur.

L'augmentation de la température des gaz d'échappement nécessaire à une phase d'élimination des oxydes de soufre entraîne une augmentation de la consommation en carburant du véhicule. En outre, les moteurs de type Diesel ont généralement recours à une ou plusieurs injections tardives de carburant dans les cylindres du moteur lors de phases d'élimination des oxydes de soufre, ce qui pose un problème de dilution de carburant dans l'huile de lubrification du moteur. Cette dilution de carburant dans l'huile de lubrification du moteur accroît les problèmes de fiabilité des organes mécaniques. La gestion des phases de régénération du dispositif de piégeage catalytique, pour éliminer les oxydes d'azote $NO_x$ ou les oxydes de soufre $SO_x$ est alors primordiale.

En effet, la gestion de l'emposionnement au soufre du dispositif de piégeage catalytique repose généralement sur un modèle en boucle ouverte de chargement et de déchargement en oxydes de soufre du dispositif de piégeage catalytique. Ce modèle est calibré pour le pire cas de fonctionnement, c'est-à-dire dans lequel la totalité du soufre traversant le dispositif de piégeage catalytique est piégé. En outre, les phénomènes physicochimiques ayant lieu lors de phases d'élimination des oxydes de soufre sont extrêmement sensibles, car une faible variation de paramètre peut entraîner une forte variation de l'efficacité de l'élimination des oxydes de soufre.

Une calibration de ce modèle de chargement et de déchargement en oxydes de soufre dans le pire cas peut mener à une importante sous-estimation de l'efficacité de l'élimination des oxydes de soufre, ce qui entraîne un allongement de la durée d'une phase d'élimination des oxydes de soufre, et donc une augmentation de la dilution de carburant dans l'huile de lubrification du moteur.

Ainsi, une sous-estimation de la quantité d'oxydes de soufre présente dans le dispositif de piégeage catalytique peut entraîner une dérive des émissions en oxydes d'azote au-delà des seuils acceptables.

Par ailleurs, une trop importante surestimation de la quantité de soufre présente dans le dispositif de piégeage catalytique conduit à effectuer un nombre de phases d'élimination des oxydes de soufre trop important par rapport aux besoins du système, ce qui peut entraîner une importante dilution de carburant dans l'huile de lubrification du moteur.

Il existe des systèmes gérant les phases d'élimination des oxydes de soufre tel que décrit dans les brevets européens EP 1 121 519 B1 et EP 1 161 618 B1.

Le brevet européen EP 1 121 519 B1 porte sur un procédé d'élimination des oxydes de soufre d'un catalyseur à accumulation d'oxydes d'azote dans lequel on détermine l'état de charge en soufre du catalyseur, on surveille le fonctionnement du catalyseur, et en cas de dépassement d'une valeur de seuil de charge en soufre, ou de constatation d'une irrégularité de l'activité du catalyseur, on vérifie l'opportunité de lancer une phase d'élimination des oxydes de soufre en vérifiant si le mode de fonctionnement de composants concernés par la sécurité est correct et en vérifiant si les paramètres de roulage prédéterminés sont respectés dans la situation de roulage actuelle.

Le brevet européen EP 1 161 618 B1 porte sur un procédé d'élimination des oxydes de soufre d'un catalyseur à accumulation d'oxydes d'azote. En cas de dépassement d'une valeur dé seuil de charge en soufre et d'autorisation, une phase d'élimination des oxydes de soufre est démarrée, mais est retardée en cas de niveau d'émission d'oxydes d'azote inférieur à une valeur prédéterminée d'au moins un seuil de tolérance prédéterminé, jusqu'au dépassement de ce seuil de tolérance ou jusqu'à la survenue d'un modèle de déviation caractéristique. Le réajustement du délai séparant deux phases consécutives d'élimination des oxydes de soufre du catalyseur est effectué à partir du système de contrôle des gaz d'échappement du moteur.

L'invention propose un système et un procédé d'élimination des oxydes de soufre d'un dispositif de piégeage catalytique d'oxydes d'azote, disposé dans la ligne d'échappement d'un moteur à combustion interne de type Diesel, notamment de véhicule automobile, qui améliore la gestion des déclenchements des phases d'élimination des oxydes de soufre, à faible coût, et permettant de limiter les risques de surconsommation de carburant et de dilution de carburant dans l'huile de lubrification du moteur.

Selon un aspect de l'invention, il est proposé un système de régénération d'un dispositif de piégeage catalytique d'oxydes d'azote disposé dans la ligne d'échappement d'un moteur à combustion interne de type Diesel, notamment de véhicule automobile. Le système comprend des premiers moyens de détermination de la masse d'oxydes d'azote éliminée durant une phase d'élimination des oxydes d'azote du dispositif de piégeage catalytique et de deuxièmes moyens de détermination de la masse d'oxydes d'azote présente dans le dispositif de piégeage catalytique lors du déclenchement de ladite phase d'élimination des oxydes d'azote. Le système comprend des moyens de commande aptes à déterminer le déclenchement de la prochaine phase d'élimination des oxydes de soufre en fonction de valeurs d'un critère dépendant de ladite masse d'oxydes d'azote éliminée et de ladite masse d'oxydes d'azote présente.

L'utilisation d'un tel critère permet d'optimiser le déclenchement de la prochaine phase d'élimination des oxydes de soufre, et ainsi d'optimiser la consommation en carburant du moteur et de limiter la dilution de carburant dans l'huile de lubrification du moteur lors d'une phase d'élimination des oxydes de soufre du dispositif de piégeage catalytique.

Dans un mode de réalisation, le système comprend des moyens de mémorisation adaptés pour mémoriser un premier ensemble de valeurs dudit critère relatives à des phases d'élimination des oxydes d'azote antérieures à la dernière phase d'élimination des oxydes de soufre, et pour mémoriser un deuxième ensemble de valeurs dudit critère relatives à des phases d'élimination des oxydes d'azote ultérieures à la dernière phase d'élimination des oxydes de soufre.

Calculer une pluralité de valeurs du critère permet d'améliorer la précision et la fiabilité du système.

Dans un mode de réalisation, le système comprend des premiers moyens de calcul d'une première valeur moyenne dudit critère à partir dudit premier ensemble de valeurs et d'une deuxième valeur moyenne dudit critère à partir dudit deuxième ensemble de valeurs. Le système comprend, en outre, des deuxièmes moyens de calcul d'une première différence entre ladite deuxième valeur moyenne dudit critère et la dite première valeur moyenne dudit critère, et des troisièmes moyens de détermination d'une première masse d'oxydes de soufre éliminée durant la dernière phase d'élimination des oxydes de soufre à partir de ladite première différence.

L'utilisation de ces valeurs moyennes permet d'améliorer la précision du système.

Selon un mode de réalisation, le système comprend, en outre, des quatrièmes moyens de détermination, par un calcul en boucle ouverte, d'une deuxième masse d'oxydes de soufre éliminée durant la dernière phase d'élimination des oxydes de soufre, et des troisièmes moyens de calcul d'une deuxième différence entre ladite deuxième masse d'oxydes de soufre et ladite première masse d'oxydes de soufre.

Dans un mode de réalisation, lesdits moyens de commande sont, en outre, adaptés pour retarder d'un premier délai le déclenchement de la prochaine phase d'élimination des oxydes de soufre lorsque ladite deuxième différence est inférieure à un seuil négatif.

Un tel cas ne représente aucun risque de pollution, car le système surestime la masse de soufre présente dans le dispositif de piégeage catalytique, ou en d'autres termes, le système sous-estime l'efficacité de la phase d'élimination des oxydes d'azote, au-delà d'un certain écart, la prochaine phase d'élimination des oxydes de soufre est retardée.

Selon un mode de réalisation, le système comprend, en outre, des cinquièmes moyens de détermination d'une troisième masse d'oxydes de soufre présente dans le dispositif de piégeage catalytique, et des quatrièmes moyens de calcul de la somme de ladite troisième masse d'oxydes de soufre présente dans le dispositif de piégeage catalytique et de ladite deuxième différence.

On obtient ainsi une valeur représentative de la masse totale de soufre présente en prenant en compte le modèle de chargement en soufre du dispositif de piégeage catalytique, et de l'écart des deux valeurs estimées de masse d'oxydes de soufre ayant quitté le piège durant la dernière phase d'élimination des oxydes de soufre.

Selon un mode de réalisation, lesdits moyens de commande sont, en outre, adaptés pour déclencher immédiatement une phase d'élimination des oxydes de soufre du dispositif de piégeage catalytique, lorsque ladite somme est supérieure à un seuil maximal.

Ainsi, lorsque la quantité de soufre présente dans le dispositif de piégeage catalytique dépasse une valeur limite, pouvant engendrer des émissions excessives d'oxydes d'azote, une phase d'élimination des oxydes de soufre est immédiatement déclenchée.

Dans un mode de réalisation, lesdits moyens de commande sont, en outre, adaptés pour diminuer ledit seuil maximal de la valeur de ladite deuxième différence.

Lorsque la masse d'oxydes de soufre présente dans le dispositif de piégeage catalytique est inférieure à la limite maximale acceptable, la prochaine phase d'élimination des oxydes d'azote n'est pas anticipée, mais la masse maximale de soufre acceptable peut être diminuée de ladite deuxième différence.

Dans un mode de réalisation, le système comprend, en outre, des moyens de validation des valeurs de ladite masse d'oxydes d'azote éliminée et de ladite masse d'oxydes d'azote présente pour autoriser la détermination dudit critère avec lesdites valeurs.

Les critères de validation correspondent à des valeurs de paramètres de fonctionnement, tels la température dans le dispositif de piégeage catalytique, la vitesse volumique horaire des gaz d'échappement du moteur traversant le dispositif de piégeage catalytique, ou la masse d'oxydes d'azote présente dans le dispositif de piégeage catalytique, comprises dans des intervalles de valeurs prédéfinis.

Selon un autre aspect de l'invention, il est également proposé un procédé de régénération d'un dispositif de piégeage catalytique d'oxydes d'azote disposé dans la ligne d'échappement d'un moteur à combustion interne de type Diesel, notamment de véhicule automobile, dans lequel on détermine la masse d'oxydes d'azote éliminée durant une phase d'élimination des oxydes d'azote du dispositif de piégeage catalytique et on détermine la masse d'oxydes d'azote présente dans le dispositif de piégeage catalytique lors du déclenchement de ladite phase d'élimination des oxydes d'azote. On détermine le déclenchement de la prochaine phase d'élimination des oxydes de soufre en fonction de valeurs d'un critère dépendant de ladite masse d'oxydes d'azote éliminée et de ladite masse d'oxydes d'azote présente.

Selon un mode de mise en oeuvre, on mémorise un premier ensemble de valeurs dudit critère relatives à des phases d'élimination des oxydes d'azote antérieures à la dernière phase d'élimination des oxydes de soufre, et un deuxième ensemble de valeurs dudit critère relatives à des phases d'élimination des oxydes d'azote ultérieures à la dernière phase d'élimination des oxydes de soufre.

D'autres buts, caractéristiques et avantages de l'invention apparaîtront à la lecture de la description suivante, de quelques exemples nullement limitatifs, et faisant référence aux dessins annexés, sur lesquels :

- la figure 1 est une vue schématique d'un mode de réalisation d'un système selon un aspect de l'invention ; et
- la figure 2 est une vue schématique plus détaillée d'un mode de réalisation du système de la figure 1 selon un aspect de l'invention.

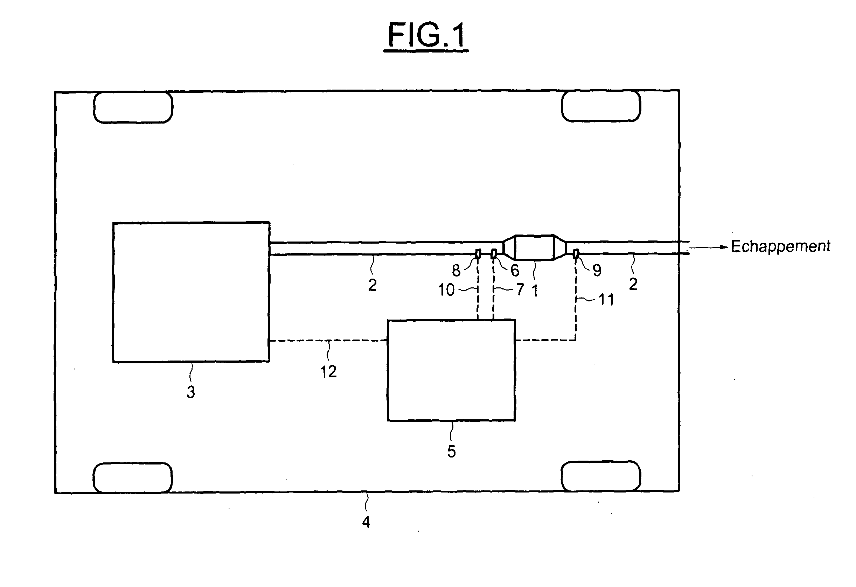

Sur la figure 1, est représentée l'architecture générale d'un système d'élimination des oxydes de soufre d'un dispositif de piégeage catalytique d'oxydes d'azote 1, comprenant une phase catalytique, et disposé dans la ligne d'échappement 2 d'un moteur à combustion interne 3, de type Diesel. Le dispositif catalytique 1 est alimenté en gaz d'échappement comprenant une richesse faible en carburant, propre au fonctionnement du moteur 3 alimenté en mélange pauvre en carburant. Le système comprend une unité de commande électronique 5 connectée avec le moteur 3, ainsi qu'avec de nombreux éléments du véhicule 4, non représentés. En particulier, l'unité de commande électronique 5 est capable de commander ou gérer le fonctionnement du moteur 3 lors de phases d'élimination des oxydes de soufre $SO_x$ ou de phases d'élimination des oxydes d'azote $NO_x$ du dispositif de piégeage catalytique 1.

Une phase d'élimination des oxydes de soufre du dispositif de piégeage catalytique 1 correspond à une phase durant laquelle on élimine des oxydes de soufre $SO_x$ qui bloquent les sites d'adsorption de la phase catalytique présente dans le dispositif de piégeage catalytique 1. Une phase de désorption doit se faire dans un Intervalle de hautes températures, délimité par une température limite inférieure et une température limite supérieure. La température limite inférieure est la température qu'il faut atteindre dans le dispositif de piégeage catalytique 1 pour que l'élimination des oxydes de soufre de la phase catalytique du dispositif de piégeage 1 puisse avoir lieu. Cette température limite inférieure, dans le dispositif de piégeage catalytique 1, est généralement obtenue au moyen d'une phase de chauffage effectuée par une élévation de la température des gaz d'échappement du moteur 3 alimenté par un mélange riche en carburant.

Lorsque la température dans le dispositif de piégeage catalytique 1 a atteint la température limite inférieure de l'intervalle de hautes températures, nécessaire à une désorption des oxydes de soufre $SO_x$ de la phase catalytique, l'unité de commande électronique 5 gère le fonctionnement du moteur 3 de sorte que celui-ci alterne successivement une phase d'alimentation du moteur 3 avec un mélange riche en carburant, durant laquelle le soufre est désorbé et la température à l'intérieur du dispositif de piégeage catalytique 1 augmente, et une phase d'alimentation du moteur 3 avec un mélange pauvre en carburant, durant laquelle la température à l'intérieur du dispositif de piégeage catalytique 1 diminue.

Durant ces alternances de phases, avec successivement, une augmentation de la température suivie d'une baisse de la température à l'intérieur du dispositif de piégeage catalytique 1, l'unité de commande électronique 5 gère la phase d'élimination des oxydes de soufre de sorte que cette température à l'intérieur du dispositif de piégeage catalytique 1 oscille dans l'intervalle de haute température. La température limite supérieure de l'intervalle de haute température correspond à la température limite au dessus de laquelle la phase catalytique pourrait se détériorer. Par exemple, la température limite inférieure de l'intervalle de haute température peut être de l'ordre de 650°C, et la température limite supérieure de l'intervalle de haute température peut être de l'ordre de 750°C, pour des phases catalytiques classiques.

L'unité de commande électronique 5 est connectée à un capteur de température 6 disposé en amont du dispositif de piégeage catalytique 1 dans la ligne d'échappement 2, par une connexion 7. En outre, l'unité de commande électronique 5 est connectée à une première sonde d'oxygène 8 et à une seconde sonde à oxygène 9 disposée dans la ligne d'échappement 2, respectivement en amont et en aval du dispositif de piégeage catalytique 1, par des connexions 10 et 11. La sonde amont 8 permet de contrôler et réguler la richesse du mélange alimentant le moteur 3. L'unité de commande électronique 5 est également connectée au moteur 3 par une connexion 12.

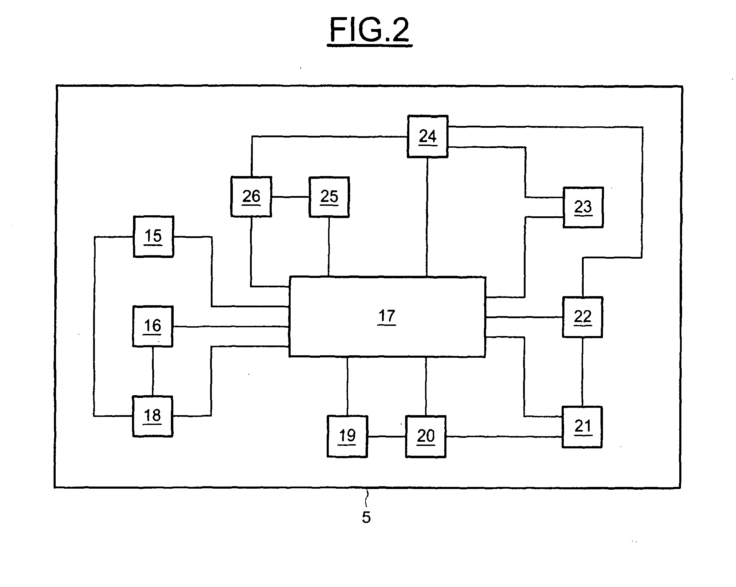

Tel qu'illustré sur la figure 2, l'unité de commande électronique 5 comprend un premier module de détermination 15 de la masse d'oxydes d'azote $NO_x$ éliminée durant une phase d'élimination des oxydes d'azote du dispositif de piégeage catalytique 1. L'unité de commande électronique 5 comprend, en outre, un deuxième module de détermination 16 de la masse d'oxydes d'azote $NO_x$ présente dans le dispositif de piégeage catalytique 1, notamment lors du déclenchement d'une phase d'élimination des oxydes d'azote $NO_x$.

L'unité de commande électronique 5 comprend, en outre, un module de commande 17 apte à déterminer le déclenchement de la prochaine phase d'élimination des oxydes de soufre $SO_x$ en fonction de va-

leurs d'un critère C dépendant de ladite masse d'oxydes d'azote éliminée et de ladite masse d'oxydes d'azote présente, respectivement fournies par les premier et deuxième modules de détermination 15 et 16. Le module de commande 17 estime, pour une phase d'élimination des oxydes d'azote NO$_x$ le critère C au moyen de l'équation suivante :

$$C = \frac{M_{NOx\_mes}}{M_{NOx\_mod}}$$

dans laquelle

$M_{NOx\_mes}$     représente la masse d'oxydes d'azote éliminée lors de ladite phase d'élimination des oxydes d'azote,

$M_{NOx\_mod}$     représente la masse d'oxydes d'azote présente dans le

dispositif de piégeage catalytique 1 lors du déclenchement de ladite phase d'élimination des oxydes d'azote.

L'évaluation du critère C est effectuée pour les phases d'élimination des oxydes d'azote NO$_x$ précédant une phase d'élimination des oxydes de soufre SO$_x$, ainsi que pour les phases d'élimination des oxydes d'azote NO$_x$ succédant à ladite phase d'élimination des oxydes de soufre SO$_x$. L'utilisation d'un ensemble de valeurs de critères C permet d'améliorer la qualité des données utilisées par le système et ainsi d'améliorer la précision du système.

Le système peut comprendre un module de validation 18 optionnel permettant de valider ou non les données fournies par les premier et deuxième modules de détermination 15 et 16 aux fins du calcul du critère C. Le module de validation 18 tient par exemple compte de valeurs de la température du dispositif de piégeage catalytique, de la vitesse volumique horaire des gaz traversant le dispositif de piégeage catalytique 1, ou de la masse d'oxydes d'azote présente dans le dispositif de piégeage catalytique 1. Si les valeurs de ces paramètres sont comprises dans des intervalles de valeurs prédéterminés, alors le module de validation 18 autorise le module de commande 17 à évaluer le critère C pour la phase d'élimination des oxydes d'azote. Les valeurs estimées du critère C pour des phases d'élimination des oxydes d'azote antérieures à la dernière phase d'élimination des oxydes de soufre forment un premier ensemble de valeurs du critère C mémorisées dans un module de mémorisation 19. Un deuxième ensemble de valeurs du critère C relatives à des phases d'élimination des oxydes d'azote ultérieures à la dernière phase d'élimination des oxydes de soufre est également mémorisé dans le module de mémorisation 19.

Un premier module de calcul 20 calcule une première valeur moyenne C$_1$ dudit critère C à partir du premier ensemble de valeurs mémorisé, et une deuxième valeur moyenne C$_2$ du critère C à partir du deuxième ensemble de valeurs mémorisé. Un deuxième module de calcul 21 effectue la différence entre ladite deuxième valeur moyenne C$_2$ du critère C et ladite première valeur moyenne C$_1$ du critère C, et un troisième module de détermination 22 estime une première masse dmS1 d'oxydes de soufre éliminée durant la dernière phase d'élimination des oxydes de soufre à partir de la première différence élaborée par le deuxième module de calcul 21.

Le troisième module de détermination 22 peut, par exemple, mettre en oeuvre une cartographie mémorisée de la première masse dmS1 d'oxydes de soufre éliminée en fonction de paramètres représentatifs du vieillissement du catalyseur et de la première différence entre la deuxième valeur moyenne C$_2$ et la première valeur moyenne C$_1$ du critère C.

Un quatrième module de détermination 23 détermine, par un calcul en boucle ouverte, une deuxième masse dmS2 d'oxydes de soufre éliminée durant la dernière phase d'élimination des oxydes de soufre.

Un troisième module de calcul 24 effectue une deuxième différence entre la deuxième masse dmS2 d'oxydes de soufre déterminée par le quatrième module de détermination 23, et la première masse dmS1 d'oxydes de soufre élaborée par le troisième module de détermination 22.

Le module de commande 17 est capable de retarder d'un premier délai le déclenchement de la prochaine phase d'élimination des oxydes de soufre lorsque la deuxième différence fournie par le troisième module de calcul 24, dmS2 - dmS1, est inférieure à un seuil négatif.

Le système comprend, en outre, un cinquième module de détermination d'une troisième masse d'oxydes mS3 de soufre présente dans le dispositif de piégeage catalytique 1 et un quatrième module de calcul 26 effectuant la somme de la troisième masse d'oxydes de soufre mS3 présente dans le dispositif de piégeage catalytique 1 et de ladite deuxième différence, dmS2 - dmS1, élaborée par ledit troisième module de calcul.

Le module de commande 17, est en outre, adapté pour déclencher immédiatement une phase d'élimination des oxydes de soufre du dispositif de piégeage catalytique 1, lorsque la somme effectuée par ledit quatrième module de calcul 26, mS3 + (dmS2 - dmS1), est supérieure à un seuil maximal.

Lorsque ladite somme mS3 + (dmS2 - dmS1) délivrée par le quatrième module de calcul est supérieure ou égale audit seuil maximal, le module de commande 17 est capable de diminuer ledit seuil maximal de la valeur de ladite deuxième différence fournie par le troisième module de calcul 24.

Aussi, il est possible, à faible coût, d'optimiser les phases d'élimination d'oxydes de soufre d'un dispositif de piégeage catalytique d'oxydes d'azote disposé dans la ligne d'échappement d'un moteur à combustion interne de type Diesel, en limitant la surconsommation de carburant du moteur durant une phase d'élimination des oxydes de soufre, et en limitant les problèmes liés à la dilution de carburant dans l'huile de lubrification du moteur.

## Revendications

1. Système de régénération d'un dispositif de piégeage catalytique d'oxydes d'azote (1) disposé dans la ligne d'échappement (2) d'un moteur à combustion interne (3) de type Diesel, notamment de véhicule automobile, comprenant des premiers moyens (15) de détermination de la masse d'oxydes d'azote éliminée durant une phase d'élimination des oxydes d'azote du dispositif de piégeage catalytique (1) et des deuxièmes moyens (16) de détermination de la masse d'oxydes d'azote présente dans le dispositif de piégeage catalytique (1) lors du déclenchement de ladite phase d'élimination des oxydes d'azote, **caractérisé en ce qu'**il comprend des moyens de commande (17) aptes à déterminer le déclenchement de la prochaine phase d'élimination des oxydes de soufre en fonction de valeurs d'un critère dépendant de ladite masse d'oxydes d'azote éliminée et de ladite masse d'oxydes d'azote présente.

2. Système selon la revendication 1, comprenant, en outre des moyens de mémorisation (19) adaptés pour mémoriser un premier ensemble de valeurs dudit critère relatives à des phases d'élimination des oxydes d'azote antérieures à la dernière phase d'élimination des oxydes de soufre, et pour mémoriser un deuxième ensemble de valeurs dudit critère relatives à des phases d'élimination des oxydes d'azote ultérieures à la dernière phase d'élimination des oxydes de soufre.

3. Système selon la revendication 2, comprenant, en outre, des premiers moyens de calcul (20) d'une première valeur moyenne dudit critère à partir dudit premier ensemble de valeurs et d'une deuxième valeur moyenne dudit critère à partir dudit deuxième ensemble de valeurs, des deuxièmes moyens de calcul (21) d'une première différence entre ladite deuxième valeur moyenne dudit critère et ladite première valeur moyenne dudit critère, et des troisièmes moyens de détermination (22) d'une première masse d'oxydes de soufre éliminée durant la dernière phase d'élimination des oxydes de soufre à partir de ladite première différence.

4. Système selon la revendication 3, comprenant, en outre, des quatrièmes moyens de détermination (23), par un calcul en boucle ouverte, d'une deuxième masse d'oxydes de soufre éliminée durant la dernière phase d'élimination des oxydes de soufre, et des troisièmes moyens de calcul (24) d'une deuxième différence entre ladite deuxième masse d'oxydes de soufre et ladite première masse d'oxydes de soufre.

5. Système selon la revendication 4, dans lequel lesdits moyens de commande (17) sont, en outre, adaptés pour retarder d'un premier délai le déclenchement de la prochaine phase d'élimination des oxydes de soufre lorsque ladite deuxième différence est inférieure à un seuil négatif.

6. Système selon la revendication 4 ou 5, comprenant, en outre, des cinquièmes moyens de détermination (25) d'une troisième masse d'oxydes de soufre présente dans le dispositif de piégeage catalytique, et des quatrièmes moyens de calcul (26) de la somme de ladite troisième masse d'oxydes de soufre présente dans le dispositif de piégeage catalytique et de ladite deuxième différence.

7. Système selon la revendication 6, dans lequel lesdits moyens de commande (17) sont, en outre, adaptés pour déclencher immédiatement une phase d'élimination des oxydes de soufre du dispositif de piégeage catalytique, lorsque ladite somme est supérieure à un seuil maximal.

8. Système selon la revendication 6 ou 7, dans lequel lesdits moyens de commande (17) sont, en outre, adaptés pour diminuer ledit seuil maximal de la valeur de ladite deuxième différence, lorsque ladite somme est inférieure ou égale audit seuil maximal.

9. Système selon l'une des revendications précédentes, comprenant, en outre, des moyens de validation (18) des valeurs de ladite masse d'oxydes d'azote éliminée et de ladite masse d'oxydes d'azote présente pour autoriser la détermination dudit critère avec lesdites valeurs.

10. Procédé de régénération d'un dispositif de piégeage catalytique d'oxydes d'azote (1) disposé dans la ligne d'échappement (2) d'un moteur à combustion interne (3) de type Diesel, notamment de véhicule automobile, dans lequel on détermine la masse d'oxydes d'azote éliminée durant une phase d'élimination des oxydes d'azote du dispositif de piégeage catalytique (1) et on détermine la masse d'oxydes d'azote présente dans le dispositif de piégeage catalytique (1) lors du déclenchement de ladite phase d'élimination des oxydes d'azote, **caractérisé en ce que** l'on détermine le déclenchement de la prochaine phase d'élimination des oxydes de soufre en fonction de valeurs d'un critère dépendant de ladite masse d'oxydes d'azote éliminée et de ladite masse d'oxydes d'azote présente.

11. Procédé selon la revendication 10, dans lequel on mémorise un premier ensemble de valeurs dudit critère relatives à des phases d'élimination des oxydes d'azote antérieures à la dernière phase d'élimination des oxydes de soufre, et un deuxième ensemble de valeurs dudit critère relatives à des phases d'élimination des oxydes d'azote ultérieures à la dernière phase d'élimination des oxydes de soufre.

**Claims**

1.  System for regenerating a device (1) for catalytically trapping oxides of nitrogen which is positioned in the exhaust line (2) of an internal combustion engine (3) of the diesel type, notably of a motor vehicle, comprising first determining means (15) for determining the mass of oxides of nitrogen that has been eliminated during a phase of eliminating the oxides of nitrogen from the catalytic trapping device (1) and second determining means (16) for determining the mass of oxides of nitrogen that is present in the catalytically trapping device (1) at the time of initiation of the said phase of eliminating the oxides of nitrogen, **characterized in that** it comprises control means (17) able to determine the initiation of the next phase of eliminating the oxides of sulphur as a function of values of a criterion that is dependent on the said mass of oxides of nitrogen eliminated and on the said mass of oxides of nitrogen present.

2.  System according to Claim 1, further comprising memory means (19) designed to store a first collection of values of the said criterion which relate to phases of eliminating the oxides of nitrogen prior to the last phase of eliminating the oxides of sulphur, and to store a second collection of values of the said criterion that relate to phases of eliminating the oxides of nitrogen subsequent to the last phase of eliminating the oxides of sulphur.

3.  System according to Claim 2, further comprising first calculating means (20) of calculating a first mean value of the said criterion from the said first collection of values and a second mean value of the said criterion from the said second collection of values, second calculating means (21) of calculating a first difference between the said second mean value of the said criterion and the said first mean value of the said criterion, and third determining means (22) of determining, from the said first difference, a first mass of oxides of sulphur that have been eliminated during the last phase of eliminating the oxides of sulphur.

4.  System according to Claim 3, further comprising fourth determining means (23) of using open-loop calculation to determine a second mass of oxides of sulphur that has been eliminated during the last phase of eliminating the oxides of sulphur, and third calculating means (24) of calculating a second difference between the said second mass of oxides of sulphur and the said first mass of oxides of sulphur.

5.  System according to Claim 4, in which the said control means (17) are also designed to delay initiation of the next phase of eliminating the oxides of sulphur by a first delay when the said second difference is below a negative threshold.

6.  System according to Claim 4 or 5, further comprising fifth determining means (25) for determining a third mass of oxides of sulphur present in the catalytic trapping device, and fourth calculating means (26) of calculating the sum of the said third mass of oxides of sulphur present in the catalytic trapping device and the said second difference.

7.  System according to Claim 6, in which the said control means (17) are also designed to initiate immediately a phase of eliminating the oxides of sulphur from the catalytic trapping device when the said sum is above a maximum threshold.

8.  System according to Claim 6 or 7, in which the said control means (17) are also designed to reduce the said maximum threshold of the value of the said second difference when the said sum is below or equal to the said maximum threshold.

9.  System according to one of the preceding claims, further comprising validating means (18) of validating the values of the said mass of oxides of nitrogen that has been eliminated and of the said mass of oxides of nitrogen present in order to authorize the said values to be used to determine the said criterion.

10.  Method for regenerating a device (1) for catalytically trapping oxides of nitrogen, which is arranged in the exhaust line (2) of an internal combustion engine (3) of the diesel type, notably of a motor vehicle, in which method the mass of oxides of nitrogen that have been eliminated during a phase of eliminating the oxides of nitrogen from the catalytic trapping device (1) is determined and the mass of oxides of nitrogen present in the catalytic trapping device (1) at the time of initiation of the said phase of eliminating the oxides of nitrogen is determined, **characterized in that** the initiation of the next phase of eliminating oxides of sulphur is determined as a function of values of a criterion dependent on the said mass of oxides of nitrogen eliminated and on the said mass of oxides of nitrogen present.

11.  Method according to Claim 10, in which a first collection of values of the said criterion which relate to phases of elimination of oxides of nitrogen prior to the last phase of eliminating the oxides of sulphur and a second collection of values of the said criterion which relate to phases of elimination of the oxides of nitrogen subsequent to the last phase of eliminating the oxides of sulphur are stored in the memory.

**Patentansprüche**

1. System zur Regeneration einer Vorrichtung zur katalytischen Einlagerung von Stickoxiden (1), die in der Auspuffanlage (2) eines Verbrennungsmotors (3) vom Typ Diesel, insbesondere eines Kraftfahrzeugs, angeordnet ist, mit ersten Einrichtungen (15) zur Bestimmung der während einer Eliminierungsphase der Stickoxide aus der Vorrichtung zur katalytischen Einlagerung (1) eliminierten Masse von Stickoxiden, und mit zweiten Einrichtungen (16) zur Bestimmung der Masse von Stickoxiden, die in der Vorrichtung zur katalytischen Einlagerung (1) beim Start der Eliminierungsphase der Stickoxide vorhanden ist, **dadurch gekennzeichnet, dass** es Steuereinrichtungen (17) enthält, die den Start der nächsten Eliminierungsphase der Schwefeloxide in Abhängigkeit von Werten eines Kriteriums bestimmen können, das von der eliminierten Masse von Stickoxiden und von der vorhandenen Masse von Stickoxiden abhängt.

2. System nach Anspruch 1, das weiter Speichereinrichtungen (19) enthält, die geeignet sind, um eine erste Einheit von Werten des Kriteriums bezüglich von Eliminierungsphasen der Stickoxide vor der letzten Eliminierungsphase der Schwefeloxide zu speichern, und um eine zweite Einheit von Werten des Kriteriums bezüglich von Eliminierungsphasen der Stickoxide nach der letzten Eliminierungsphase der Schwefeloxide zu speichern.

3. System nach Anspruch 2, das außerdem erste Einrichtungen (20) zur Berechnung eines ersten Mittelwerts des Kriteriums ausgehend von der ersten Einheit von Werten und eines zweiten Mittelwerts des Kriteriums ausgehend von der zweiten Einheit von Werten, zweite Einrichtungen (21) zur Berechnung einer ersten Differenz zwischen dem zweiten Mittelwert des Kriteriums und dem ersten Mittelwert des Kriteriums, und dritte Einrichtungen (22) zur Bestimmung einer ersten Masse von Schwefeloxiden, die während der letzten Eliminierungsphase der Schwefeloxide eliminiert wurde, ausgehend von der ersten Differenz enthält.

4. System nach Anspruch 3, das außerdem vierte Einrichtungen (23) zur Bestimmung, durch eine Berechnung in offener Schleife, einer zweiten Masse von Schwefeloxiden, die während der letzten Eliminierungsphase der Schwefeloxide eliminiert wird, und dritte Einrichtungen (24) zur Berechnung einer zweiten Differenz zwischen der zweiten Masse von Schwefeloxiden und der ersten Masse von Schwefeloxiden enthält.

5. System nach Anspruch 4, bei dem die Steuereinrichtungen (17) außerdem geeignet sind, um den Start der nächsten Eliminierungsphase der Schwefeloxide um eine erste Verzögerung zu verzögern, wenn die zweite Differenz unter einem negativen Schwellwert liegt.

6. System nach Anspruch 4 oder 5, das außerdem fünfte Einrichtungen (25) zur Bestimmung einer dritten Masse von Schwefeloxiden, die in der Vorrichtung zur katalytischen Einlagerung vorhanden ist, und vierte Einrichtungen (26) zur Berechnung der Summe der dritten in der Vorrichtung zur katalytischen Einlagerung vorhandenen Masse von Schwefeloxiden und der zweiten Differenz enthält.

7. System nach Anspruch 6, bei dem die Steuereinrichtungen (17) außerdem geeignet sind, um sofort eine Eliminierungsphase der Schwefeloxide aus der Vorrichtung zur katalytischen Einlagerung zu starten, wenn die Summe höher als ein maximaler Schwellwert ist.

8. System nach Anspruch 6 oder 7, bei dem die Steuereinrichtungen (17) außerdem geeignet sind, um den maximalen Schwellwert des Werts der zweiten Differenz zu verringern, wenn die Summe geringer als der oder gleich dem maximalen Schwellwert ist.

9. System nach einem der vorhergehenden Ansprüche, das außerdem Validierungseinrichtungen (18) der Werte der eliminierten Masse von Stickoxiden und der vorhandenen Masse von Stickoxiden enthält, um die Bestimmung des Kriteriums mit den Werten zu erlauben.

10. Verfahren zur Regeneration einer Vorrichtung zur katalytischen Einlagerung von Stickoxiden (1), die in der Auspuffleitung (2) eines Verbrennungsmotors (3) vom Typ Diesel, insbesondere eines Kraftfahrzeugs, angeordnet ist, bei dem die während einer Eliminierungsphase der Stickoxide aus der Vorrichtung zur katalytischen Einlagerung (1) eliminierte Masse von Stickoxiden bestimmt wird und die beim Start der Eliminierungsphase der Stickoxide in der Vorrichtung zur katalytischen Einlagerung (1) vorhandene Masse von Stickoxiden bestimmt wird, **dadurch gekennzeichnet, dass** der Start der nächsten Eliminierungsphase der Schwefeloxide in Abhängigkeit von Werten eines Kriteriums bestimmt wird, das von der eliminierten Masse von Stickoxiden und von der vorhandenen Masse von Stickoxiden abhängt.

**11.** Verfahren nach Anspruch 10, bei dem eine erste Einheit von Werten des Kriteriums bezüglich von Eliminierungsphasen der Stickoxide vor der letzten Eliminierungsphase der Schwefeloxide und eine zweite Einheit von Werten des Kriteriums bezüglich von Eliminierungsphasen der Stickoxide nach der letzten Eliminierungsphase der Schwefeloxide gespeichert wird.

FIG.1

Echappement

# FIG.2

EP 2 097 622 B1

## RÉFÉRENCES CITÉES DANS LA DESCRIPTION

**Documents brevets cités dans la description**

- EP 1121519 B1
- EP 1161618 B1